# FASCICULE DE BREVET EUROPEEN

(11) **EP 0 791 491 B1**
(45) Date de publication et mention de la délivrance du brevet: **09.05.2001**
(21) Numéro de dépôt: 97400386.5
(22) Date de dépôt: 21.02.1997
(51) Int. Cl.: B60G 15/07, F16F 1/12

(54) **Suspension de roue à ressort hélicoidal**
Radaufhängung mit Schraubenfeder
Wheel suspension with helical spring

(30) Priorité: 23.02.1996 FR 9602240
(43) Date de publication de la demande: 27.08.1997
(73) Titulaire: ALLEVARD REJNA AUTOSUSPENSIONS, 92210 Saint-Cloud (FR)
(72) Inventeur: Henri, Roger, 52300 Mussey sur Marne (FR); Tissot, Michel, 21121 Darois (FR)
(74) Mandataire: Chambon, Gérard

(56) Documents cités:
- EP-A- 0 006 036
- EP-A- 0 574 650
- WO-A-89/05242
- DE-A- 4 110 471
- DE-A- 4 203 658
- DE-U- 1 660 341
- FR-A- 2 540 586
- FR-A- 2 600 595
- US-A- 2 754 112
- US-A- 3 806 150
- US-A- 5 078 370
- PATENT ABSTRACTS OF JAPAN vol. 006, no. 187 (M-158), 25 Septembre 1982 & JP 57 095207 A (NHK SPRING CO LTD), 14 Juin 1982,

## Description

L'invention concerne une suspension de roue à ressort hélicoidal conforme au préambule de la revendication 1.

I1 est connu de réaliser pour les véhicules roulant une suspension de roue pourvue d'une jambe élastique qui assure la liaison entre le châssis d'un véhicule et ladite roue, et qui comporte un amortisseur télescopique entouré par un ressort hélicoïdal dont les spires d'extrémité sont en contact sur des éléments d'appui solidaires respectivement du châssis et dudit amortisseur dont l'une des extrémités de ce dernier est reliée au moyeu de la roue et à au moins un bras oscillant.

C'est notamment le cas des suspensions avec jambes élastiques du type MAC-PHERSON.

Si l'amortisseur est disposé coaxialement à l'axe du ressort, toutes les forces transversales qui existent au niveau de la fixation au châssis doivent alors être absorbées par la tige du piston de l'amortisseur, ce qui est évidemment cause de frottement.

Pour réduire les forces transversales, on a déjà imaginé de disposer l'amortisseur dans le ressort, de manière telle que la force résultante du ressort fasse un angle aigu avec l'axe de l'amortisseur.

Toutefois, il est connu que les forces transversales ne peuvent être supprimées que si la force résultante (ou résultante des forces) ou encore la ligne d'effort du ressort coïncide avec la ligne d'action du châssis.

Or, l'inclinaison maximale de l'amortisseur est limitée du fait que ce dernier est disposé dans le ressort et que la roue doit posséder un espace suffisant pour ses débattements, ce qui est d'autant plus difficile à obtenir que le pneu est large, entraînant un déplacement correspondant de son point d'appui au sol.

C'est la raison pour laquelle le brevet EP 0 319 651 propose une suspension qui est remarquable en ce que la ligne médiane du ressort possède, à l'état exempt de charge, une allure en forme de S.

Toutefois, la reproductibilité des caractéristiques de forme de tels ressorts au cours de leur fabrication peut présenter des difficultés.

Pour d'autres raisons que celles évoquées ci-avant, on a aussi imaginé dans le W0-A-8905242, divulguant les caractéristiques du préambule de la revendication 1, des supports pour la spire supérieure sous la forme d'un siège tournant en plusieurs pièces et d'une pluralité de langues réparties sur environ les 3/4 du développé de ladite spire sur lesquelles cette dernière vient s'appuyer successivement en fonction de la compression du ressort.

Dans le brevet US-A-2,754,112 on compense la perte, due à l'usure, de la force élastique du ressort, au moyen d'un empilement d'anneaux.

Mais il est clair que dans ces deux cas on ne cherche pas à résoudre le problème selon l'invention.

C'est pourquoi l'invention propose une suspension pourvue d'une jambe élastique telle que mentionnée ci-avant, tandis qu'entre au moins l'un des éléments d'appui solidaire du châssis et/ou respectivement de l'amortisseur et une partie localisée et limitée de la spire d'extrémité correspondante, est intercalée au moins une cale, suspension qui est remarquable en ce que la cale de l'élément d'appui de la spire d'extrémité, du côté amortisseur et/ou respectivement du côté châssis, est disposée dans une zone qui est coupée par le plan diamétral du ressort contenant la ligne d'effort du ressort et qui est située, par rapport à la ligne médiane du ressort, du côté de ladite ligne d'effort pour la spire côté amortisseur, ou respectivement du côté opposé pour la spire côté châssis.

De préférence, la cale est aménagée pour être en contact permanent avec la partie correspondante de la spire et avec l'élément d'appui dans toute la plage de travail du ressort.

Une telle disposition selon l'invention, permet de supprimer les forces transversales en permettant de superposer, ou pour le moins rapprocher, la ligne d'effort du ressort hélicoidal avec la ligne d'action du châssis.

En outre, le choix des caractéristiques de la cale (épaisseur, dureté, forme, ...) permet de s'adapter facilement au résultat recherché.

Selon un mode de réalisation, l'élément d'appui sur lequel la cale vient en contact, est une coupelle. La cale peut présenter avantageusement un moyen de fixation aménagé pour coopérer avec une partie de la spire d'extrémité, telle que par exemple une partie semi-cylindrique servant de logement pour sa fixation sur ladite partie de la spire. Chaque cale est, par exemple, en matière thermoplastique et de préférence, en polyuréthane.

Selon un mode de réalisation particulier, au moins la spire d'extrémité du ressort en contact avec l'élément d'appui solidaire du châssis, présente un diamètre inférieur à celui des autres spires du ressort tandis que ladite spire peut être excentrée du côté de la zone définie pour l'emplacement de la cale tout en ayant ou non une génératrice commune avec les autres spires du ressort.

De préférence, les spires centrales du ressort présentent à l'état exempt de charge et/ou à l'état de charge, une ligne médiane sensiblement rectiligne.

L'invention sera bien comprise et d'autres particularités apparaîtront à la lecture de la description qui va suivre et qui se réfère aux dessins annexés dans lesquels:
- la figure 1 montre une suspension selon l'invention,
- la figure 2 montre plus spécifiquement un ressort de compression du type de celui de la figure 1, disposé entre ses deux coupelles,
- les figures 3 et 4 correspondent à la figure 2 selon deux autres modes de réalisation,
- les figures 5 et 6 montrent schématiquement en perspective et en coupe, deux modes de réalisation d'une cale destinée à équiper la spire d'extrémité supérieure, c'est-à-dire la spire tournée vers la coupelle du châssis,
- les figures 7 à 10 montrent en perspective des variantes de cales destinées à équiper la spire inférieure, c'est-à-dire la spire tournée vers la coupelle d'amortisseur.

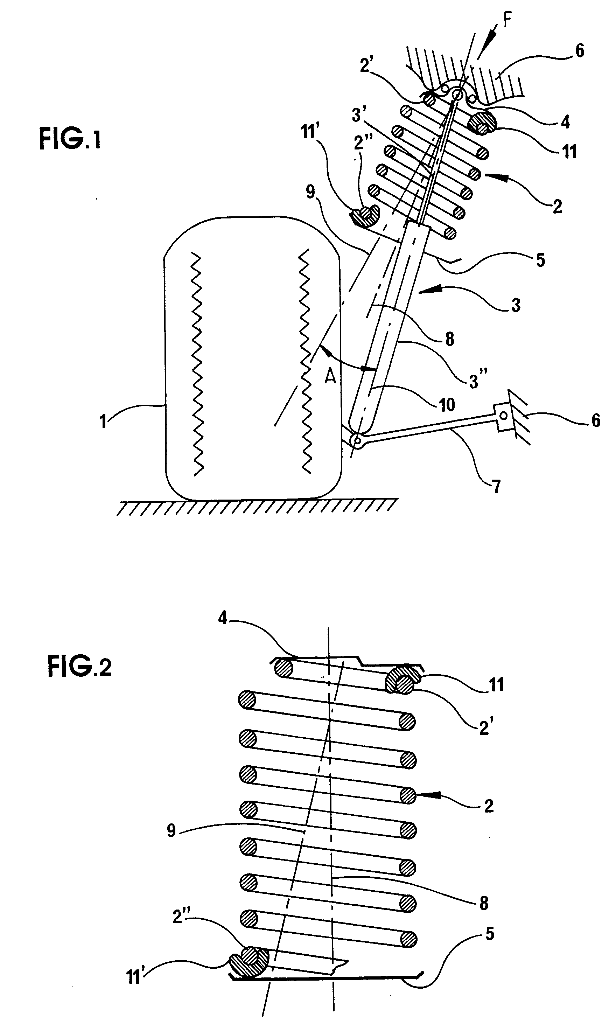

Sur la figure 1, on peut voir une suspension selon l'invention, du type MAC-PHERSON, pour une roue schématisée en 1 et comportant un ressort hélicoïdal de compression 2 à l'intérieur duquel est disposé un amortisseur télescopique 3 constitué d'une tige 3' et d'un corps tubulaire 3".

Le ressort 2 est ici disposé entre deux coupelles 4 et 5, respectivement fixées au châssis du véhicule à équiper et schématisé en 6 et au corps 3" de l'amortisseur 3 (il pourrait bien sûr s'agir d'autres éléments de maintien que des coupelles).

L'extémité du corps 3" est reliée à l'extrémité d'un bras oscillant 7 (sous forme par exemple d'un bras triangulé) et au moyeu de la roue 1, tandis que l'autre extrémité du bras 7 est fixée à une partie du châssis 6.

On a représenté aussi sur la figure 1, en traits interrompus, la ligne médiane 8 du ressort, la ligne 9 d'effort ou d'action du ressort 2 et l'axe 10 de l'amortisseur 3.

Comme déjà dit, le passage de l'amortisseur 3 dans le ressort 2 limite son inclinaison possible, inclinaison rendue d'autant plus nécessaire que la roue 1 est plus large.

En outre aussi, comme indiqué plus haut, en vue de supprimer les forces transversales, la force résultante F du ressort hélicoïdal, située sur la ligne d'effort 9, doit coïncider comme représenté sur la figure 1, avec la ligne d'action du châssis, ou autrement dit, l'angle A entre la ligne d'effort 9 et l'axe 10 de l'amortisseur doit être identique à l'angle formé entre ledit axe 10 et la ligne d'action du châssis.

Pour parvenir à ce résultat, comme le montre la figure 1, l'invention propose les aménagements suivants.

La spire d'extrémité 2', disposée sur la coupelle 4 côté châssis et/ou la spire d'extrémité 2" disposée sur la coupelle 5 côté amortisseur, présente une surface de contact sensiblement constante dans toute la plage de travail du ressort, assurée par une cale 11,11' disposée dans une certaine zone de ladite spire, zone limitée par la largeur relativement faible de ladite cale, contrairement à l'art connu où, en outre, les spires s'appliquent sur les coupelles, progressivement en fonction des efforts, éventuellement par l'intermédiaire de plusieurs éléments.

De la sorte, on peut obtenir une ligne d'effort du ressort dont la direction reste constante.

Comme le montrent bien les dessins, les cales 11, 11' généralement en matière thermoplastique, telle que du polyuréthane par exemple, sont intercalées entre les spires d'extrémité 2', 2" du ressort et les coupelles correspondantes respectivement 4 et 5.

Les cales doivent se situer dans un plan diamétral du ressort 2 comportant la ligne 9 et du côté de cette dernière pour la spire 2" disposée du côté de la coupelle 5, ou au contraire, du côté diamétralement opposé pour la spire 2' disposée du côté de la coupelle 4.

Les cales 11,11' apportent de nombreux avantages car selon les besoins et les caractéristiques à obtenir, on peut jouer, comme déjà dit, sur les caractéristiques des cales (forme, nature, épaisseur, dureté) et on verra plus loin plusieurs exemples de réalisation de ces cales.

Sur les figures 1 et 2, on a prévu au moins une cale 11, 11' pour chaque spire 2', 2" d'extrémité.

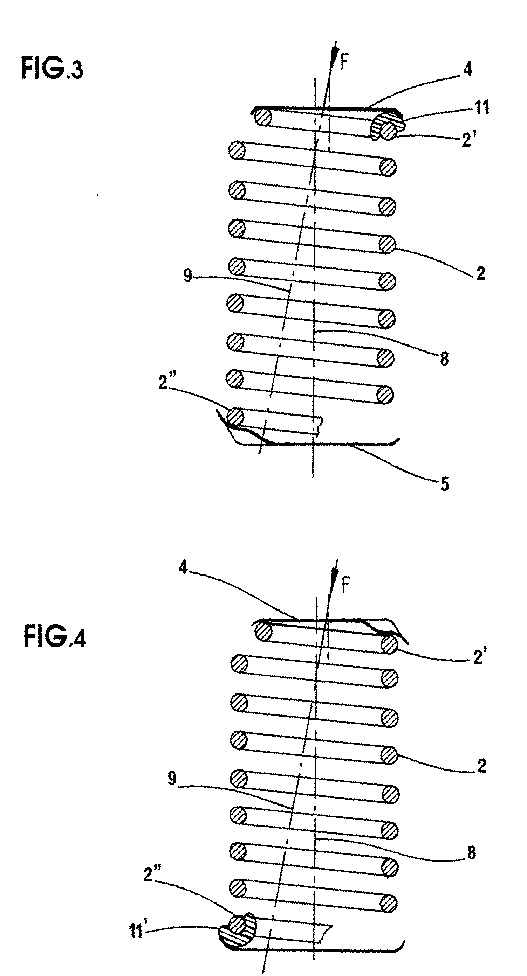

Dans le mode de réalisation de la figure 3, on a prévu au moins une cale 11, mais seulement pour la spire 2', tandis que dans la figure 4, on a prévu au moins une cale 11', mais seulement pour la spire 2".

Pour compléter les possibilités selon les caractéristiques voulues, on peut constater sur la figure 1 que la spire 2' présente un diamètre inférieur à celui des autres spires.

Au moins la spire 2' des figures 2 à 4 présente également un diamètre un peu plus petit, mais ici, ladite spire est en outre excentrée avec un décalage vers le côté, tel que défini ci-avant pour l'emplacement de la cale 11, tandis que ladite spire 2' présente de ce côté une génératrice commune avec les autres spires. On peut bien sûr imaginer que la spire 2' et la spire précédente soient plus petites ou encore qu'en outre la spire 2" le soit aussi.

Comme le montrent les figures 1 à 4, la ligne médiane 8 du ressort, si elle est rectiligne à l'état exempt de charge, elle peut le rester sous charge.

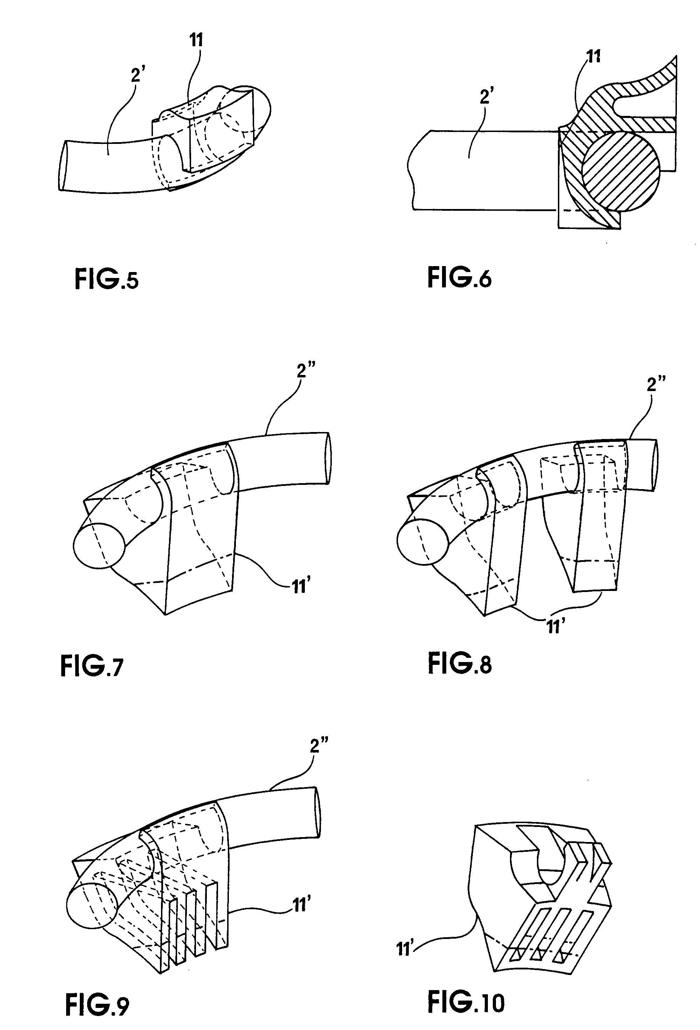

Les figures 5 à 10 montrent divers modes de réalisations possibles des cales 11, 11' schématisées sur les figures 1 à 3.

A titre d'exemple, les cales représentées sur les figures 5 à 10 présentent un logement semi-cylindrique pour venir se fixer sur la spire, comme le montrent bien lesdites figures. La fixation pourra bien entendu être consolidée par collage ou autre.

Un autre avantage des cales réside aussi dans la fonction d'amortissement des bruits et des frottements et les figures 6, 9 et 10 montrent par exemple des cales pourvues d'évidements facilitant cet amortissement.

La figure 6 montre un mode de réalisation particulier d'une cale pour une spire 2', c'est-à-dire pour une spire d'extrémité côté châssis.

Il est clair aussi que l'on peut prévoir plusieurs cales rapprochées comme le montre la figure 8.

Enfin, si les cales des figures 7 à 10 présentent une surface d'appui en coin, c'est pour des problèmes de structures particulières et d'autres formes sont prévues, comme celles en traits mixtes représentées sur lesdites figures 7 à 10.

## Revendications

1. Suspension de roue (1) pourvue d'une jambe élastique qui assure la liaison entre le châssis (6) d'un véhicule et ladite roue, et qui comporte un amortisseur télescopique (3) entouré par un ressort hélicoïdal (2) dont les spires d'extrémité (2',2") sont maintenues par des éléments d'appui (4,5) solidaires respectivement du châssis (6) et dudit amortisseur (3) dont l'une des extrémités de ce dernier est reliée au moyeu de la roue (1) et à au moins un bras oscillant (7), tandis qu'entre au moins l'un des éléments d'appui (4,5) solidaire du châssis et/ou respectivement de l'amortisseur et une partie localisée et limitée de la spire d'extrémité (2',2") correspondante, est intercalée au moins une cale (11,11'), caractérisée en ce que la cale (11, 11') de l'élément d'appui de la spire d'extrémité (2",2'), du côté amortisseur (3) et/ou respectivement du côté châssis (6), est disposée dans une zone qui est coupée par le plan diamétral du ressort contenant la ligne d'effort (9) du ressort (2) et qui est située, par rapport à la ligne médiane (8) du ressort, du côté de ladite ligne d'effort (9) pour la spire (2") côté amortisseur, ou respectivement du côté opposé pour la spire (2') côté châssis(6).

2. Suspension de roue selon la revendication 1, caractérisée en ce que la cale (11,11') est aménagée pour être en contact permanent avec la partie correspondante de la spire (2'2") et avec l'élément d'appui (4,5) dans toute la plage de travail du ressort (2).

3. Suspension de roue selon l'une des revendications 1 et 2, caractérisée en ce l'élément d'appui sur lequel la cale (11,11') vient en contact, est une coupelle (4,5).

4. Suspension de roue selon l'une des revendication 1 à 3, caractérisée en ce que la cale (11,11') est pourvue d'un moyen de fixation aménagé pour coopérer avec une partie de la spire d'extrémité (2',2").

5. Suspension de roue selon la revendication 4, caractérisée en ce que la cale (11,11') présente une partie semi-cylindrique servant de logement pour sa fixation sur une partie de la spire.

6. Suspension de roue selon l'une des revendications 3 à 5, caractérisée en ce que la cale (11,11') est en matière thermoplastique.

7. Suspension de roue selon l'une des revendications 1 à 6, caractérisée en ce qu'au moins la spire d'extrémité (2') du ressort (2) en contact avec l'élément d'appui (4) solidaire du châssis (6), présente un diamètre inférieur à celui des autres spires du ressort.

8. Suspension de roue selon l'une des revendications 1 à 7, caractérisée en ce qu'au moins la spire d'extrémité (2') du ressort, en contact avec l'élément d'appui (4) solidaire du châssis (6), est excentrée par rapport aux autres spires du ressort.

9. Suspension de roue selon la revendication 8, caractérisée en ce que le décalage de la spire d'extrémité (2') est effectué du côté de la zone définie pour l'emplacement de la cale (11).

10. Suspension de roue selon l'ensemble des revendication 7 et 8, caractérisée en ce qu'au moins la spire d'extrémité (2') du ressort, en contact avec l'élément d'appui (4) solidaire du châssis (6), présente un diamètre inférieur à celui des autres spires du ressort et est excentrée par rapport auxdites autres spires tout en ayant une génératrice commune à ces dernières.

11. Suspension de roue selon l'une des revendications 1 à 10, caractérisé en ce qu'au moins les spires centrales du ressort (2) présentent à l'état exempt de charge et/ou à l'état de charge, une ligne médiane (8) sensiblement rectiligne.

## Patentansprüche

1. Aufhängung für ein Rad (1) mit einem Federbein, das die Verbindung zwischen dem Fahrgestell (6) eines Fahrzeugs und diesem Rad herstellt und einen Teleskopstoßdämpfer (3) aufweist, der von einer Schraubenfeder (2) umgeben ist, deren Endwindungen (2', 2") durch Stützelemente (4, 5) gehalten sind, die mit dem Fahrgestell (6) bzw. mit dem Stoßdämpfer (3) fest verbunden sind, von dem eines der Enden mit der Nabe des Rads (1) und mit mindestens einem Lenker (7) verbunden ist, während zwischen mindestens einem der mit dem Fahrgestell und/oder dem Stoßdämpfer fest verbundenen Stützelemente (4, 5) und einem lokalisierten und begrenzten Teil der entsprechenden Endwindung (2', 2") mindestens ein Passstück (11, 11') eingesetzt ist, dadurch gekennzeichnet, dass das Passstück (11, 11') des Stützelements der Endwindung (2", 2') auf der Seite des Stoßdämpfers (3) und/oder auf der Seite des Fahrgestells (6) in einem Bereich angeordnet ist, der von der die Kraftlinie (9) der Feder (2) enthaltenden diametralen Ebene der Feder geschnitten wird und der bezüglich der Mittellinie (8) der Feder im Fall der stoßdämpferseitigen Windung (2") auf der Seite dieser Kraftlinie (9) bzw. im Fall der fahrgestellseitigen Windung (2') auf der entgegengesetzten Seite gelegen ist.

2. Radaufhängung nach Anspruch 1, dadurch gekennzeichnet, dass das Passstück (11, 11') ausgebildet ist, um mit dem entsprechenden Teil der Windung (2', 2") und mit dem Stützelement (4, 5) im ganzen Arbeitsbereich der Feder (2) in ständigem Kontakt zu sein.

3. Radaufhängung nach einem der Ansprüche 1 und 2, dadurch gekennzeichnet, dass das Stützelement, mit dem das Passstück (11, 11') in Kontakt kommt, ein Teller (4, 5) ist.

4. Radaufhängung nach einem der Ansprüche 1 bis 3, dadurch gekennzeichnet, dass das Passstück (11, 11') mit einem Befestigungsmittel versehen ist, das dafür ausgelegt ist, mit einem Teil der Endwindung (2', 2") zusammenzuwirken.

5. Radaufhängung nach Anspruch 4, dadurch gekennzeichnet, dass das Passstück (11, 11') einen halbzylindrischen Teil aufweist, der als Aufnahme für seine Befestigung an einem Teil der Windung dient.

6. Radaufhängung nach einem der Ansprüche 3 bis 5, dadurch gekennzeichnet, dass das Passstück (11, 11') aus thermoplastischem Material besteht.

7. Radaufhängung nach einem der Ansprüche 1 bis 6, dadurch gekennzeichnet, dass mindestens die Endwindung (2') der Feder (2), die mit dem mit dem Fahrgestell (6) fest verbundenen Stützelement (4) in Kontakt ist, einen kleineren Durchmesser als die anderen Windungen der Feder aufweist.

8. Radaufhängung nach einem der Ansprüche 1 bis 7, dadurch gekennzeichnet, dass mindestens die Endwindung (2') der Feder, die mit dem mit dem Fahrgestell (6) fest verbundenen Stützelement (4) in Kontakt ist, bezüglich der anderen Windungen der Feder exzentrisch angeordnet ist.

9. Radaufhängung nach Anspruch 8, dadurch gekennzeichnet, dass die Versetzung der Endwindung (2') auf die Seite des Bereichs vorgenommen ist, der für den Standort des Passstücks (11) definiert ist.

10. Radaufhängung nach den Ansprüchen 7 und 8 zusammen, dadurch gekennzeichnet, dass mindestens die Endwindung (2') der Feder, die mit dem mit dem Fahrgestell (6) fest verbundenen Stützelement (4) in Kontakt ist, einen kleineren Durchmesser als die anderen Windungen der Feder aufweist und bezüglich dieser anderen Windungen exzentrisch angeordnet ist, indem sie mit diesen eine Erzeugende gemeinsam hat.

11. Radaufhängung nach einem der Ansprüche 1 bis 10, dadurch gekennzeichnet, dass mindestens die mittleren Windungen der Feder (2) im lastfreien Zustand und/oder im belasteten Zustand eine im wesentlichen geradlinige Mittellinie (8) aufweisen.

## Claims

1. Suspension for a wheel (1) provided with an elastic strut which provides the connection between the chassis (6) of a vehicle and said wheel, and which comprises a telescopic damper (3) surrounded by a coil spring (2) the end turns (2', 2") of which are held by bearing elements (4, 5) locked respectively to the chassis (6) and said damper (3), one of the ends of the latter being connected to the hub of the wheel (1) and to at least one suspension arm (7), whereas at least one block (11, 11') is inserted between at least one of the bearing elements (4, 5) locked to the chassis and/or respectively the damper and a localised and limited portion of the corresponding end turn (2', 2"), characterised in that the block (11, 11') of the bearing element of the end turn (2", 2'), on the side of the damper (3) and/or respectively on the side of the chassis (6), is disposed in a zone which is cut by the diametrical plane of the spring containing the line of force (9) of the spring (2) and which is situated, in relation to the centre line (8) of the spring, on the side of said line of force (9) for the turn (2") on the side of the damper, or respectively on the opposite side for the turn (2') on the side of the chassis (6).

2. Wheel suspension according to claim 1, characterised in that the block (11, 11') is arranged to be in permanent contact with the corresponding portion of the turn (2', 2") and with the bearing element (4, 5) throughout the working range of the spring (2).

3. Wheel suspension according to one of claims 1 and 2, characterised in that the bearing element with which the block (11, 11') comes into contact, is a cup (4, 5).

4. Wheel suspension according to one of claims 1 to 3, characterised in that the block (11, 11') is provided with a fixing means arranged to co-operate with a portion of the end turn (2', 2").

5. Wheel suspension according to claim 4, characterised in that the block (11, 11') exhibits a semi-cylindrical portion serving as a housing for its fixture on a portion of the turn.

6. Wheel suspension according to one of claims 3 to 5, characterised in that the block (11, 11') is made of a thermoplastic material.

7. Wheel suspension according to one of claims 1 to 6, characterised in that at least the end turn (2') of the spring (2) in contact with the bearing element (4) locked to the chassis (6) exhibits a diameter less than that of the other turns of the spring.

8. Wheel suspension according to one of claims 1 to 7, characterised in that at least the end turn (2') of the spring in contact with the bearing element (4) locked to the chassis (6) is off-centre in relation to the other turns of the spring.

9. Wheel suspension according to claim 8, characterised in that the offset of the end turn (2') is created on the side of the zone defined for the location of the block (11).

10. Wheel suspension according to claims 7 and 8, characterised in that at least the end turn (2') of the spring, in contact with the bearing element (4) locked to the chassis (6), exhibits a diameter less than that of the other turns of the spring and is off-centre in relation to said other turns while having a generatrix common to the latter.

11. Wheel suspension according to one of claims 1 to 10, characterised in that a least the central turns of the spring (2) exhibit a substantially straight centre line (8) in the unladen state and/or in the laden state.
